# FASCICULE DE BREVET EUROPEEN

(11) **EP 0 506 498 B1**
(45) Date de publication et mention de la délivrance du brevet: **26.04.1995**
(21) Numéro de dépôt: 92400510.1
(22) Date de dépôt: 27.02.1992
(51) Int. Cl.: A47J 27/16, A23L 3/00

(54) **Installation de cuisson d'aliments à la vapeur**
Dampfkochgerät für Nahrungsmittel
Steam cooking apparatus for food products

(30) Priorité: 22.03.1991 FR 9103494
(43) Date de publication de la demande: 30.09.1992
(73) Titulaire: GETHER S.A., F-91320 Wissous (FR)
(72) Inventeur: Coupe, James Gabriel Maurice, F-91370 Verrières le Buisson (FR)
(74) Mandataire: Tanguy, Gilbert André

(56) Documents cités:
- EP-A- 0 278 889
- FR-A- 2 625 891
- FR-A- 2 635 167
- US-A- 4 350 086

## Description

L'invention se rapporte généralement à une installation de cuisson d'aliments à la vapeur et, plus particulièrement, à une installation de cuisson pour de tels aliments, en quantité industrielle et, de préférence à température moyenne, c'est-à-dire notamment à une température inférieure à 100°C et de préférence voisine de 70°C.

Dans le domaine alimentaire, on constate une augmentation constante de la demande de produits cuisinés ou précuits, proposés aux consommateurs sous forme congelée ou non. Les aliments ainsi préparés peuvent être conditionnés en sachets étanches, sous vide, ou en barquettes. La cuisson peut ainsi avantageusement être effectuée après conditionnement.

Par ailleurs, des études récentes ont permis de définir pour chaque type d'aliments les étapes optimales de cuisson, afin de préserver leurs qualités gustatives et nutritives, tout en leur assurant une conservation prolongée après cuisson.

Ces études ont montré que la montée en température, le refroidissement après cuisson, ainsi que la stabilité de la température de cuisson proprement dite, étaient des paramètres importants, caractéristiques des produits, qui devaient être maîtrisés avec précision, aussi bien pendant toute la durée de la cuisson que dans le volume de cuisson lui-même. C'est ainsi que la température de cuisson doit être ajustée, stabilisée, de façon très précise (de préférence au degré C près) en tous points du caisson de cuisson et que cette température optimale se situait souvent en-dessous de 100°C, notamment au voisinage de 70°C.

On a donc expérimenté des procédés de cuisson dans lesquels des paniers contenant des aliments étaient aspergés d'eau chaude à la température prescrite. On a aussi mis en oeuvre des systèmes de bain-marie. Ces tentatives ont révélé des difficultés pour contrôler la température de cuisson et son évolution.

Par ailleurs, les avantages de la cuisson à la vapeur sont nombreux, notamment sur le plan diététique, lorsque les aliments sont cuits en vrac et non dans un conditionnement étanche. On s'est cependant longtemps heurté à la difficulté, voire l'impossibilité, d'ajuster la température de cuisson par la vapeur, à des températures inférieures à 100°C.

Dans la demande de brevet francais n° 88 00604, on a décrit une installation de cuisson d'aliments à la vapeur remarquable en ce que la vapeur est injectée progressivement dans le caisson de cuisson et en ce que la température est ajustée en contrôlant la pression dudit caisson. L'invention concerne une telle installation perfectionnée, notamment pour contrôler plus efficacement la température et améliorer l'homogénéité de celle-ci dans tout l'espace utile du caisson.

Le document FR 2635167 décrit un caisson de cuisson à la vapeur où le refroidissement des aliments après cuisson (s'ils sont en sachets clos) peut être assuré par de l'eau froide pulvérisée.

L'invention concerne une installation de cuisson d'aliments à la vapeur, du type comportant un générateur de vapeur d'eau (11), un caisson clos (12) renfermant lesdits aliments, une sortie de vapeur (15) dudit générateur étant reliée audit caisson, et des moyens pour contrôler la pression qui règne dans ledit caisson, comprenant notamment des moyens de condensation de la vapeur contenue dans ledit caisson, caractérisée en ce que ces moyens de condensation comprennent des moyens de formation d'écoulement en lames d'un fluide froid sur la paroi interne dudit caisson comportant un répartiteur (28) s'étendant essentiellement longitudinalement et comprenant des ouvertures latérales définies au voisinage de ladite paroi interne et en ce que l'espace interne dudit répartiteur est relié à une source de fluide froid (EF).

Avec un tel agencement, on peut agir efficacement sur la pression de fonctionnement désiré (donc la température) en condensant la vapeur tout en refroidissant la paroi du caisson, ce qui évite toute restitution énergétique, notamment en début de cycle de cuisson, qui pourrait affecter l'homogénéité de la température de la vapeur à l'intérieur dudit caisson. Autrement dit, le ruissellement en nappe de l'eau permet de contrôler deux fonctions distinctes, à savoir la condensation de la vapeur dans le caisson et l'homogénéité de la température de cuisson dans tout le volume de ce caisson. En outre, après la cuisson, sa mise en oeuvre permet un premier refroidissement des aliments.

Dans la définition qui précède, la pression est à considérer en valeur absolue, c'est-à-dire qu'elle peut être supérieure ou (de préférence) inférieure à la pression atmosphérique. Ainsi, on produit de la vapeur et on injecte progressivement cette vapeur dans le caisson en fonction des besoins, ce qui permet de contrôler la température à l'intérieur du caisson en agissant sur la pression qui y règne, notamment par le contrôle de la condensation de cette vapeur. Si on ajuste la pression au-dessus de la pression atmosphérique, on obtient de façon classique une cuisson au-dessus de 100°. En revanche, une cuisson à 70° ne pose pas plus de problèmes, puisqu'il suffit de faire régner une certaine dépression (par rapport à la pression atmosphérique) dans le caisson et de contrôler cette dépression. Autrement dit, il suffit d'entretenir et contrôler une dépression par rapport à la pression atmosphérique dans ledit caisson, pour que ladite vapeur soit maintenue à une température choisie inférieure à 100°.

D'autres moyens pour contrôler la pression qui règne dans le caisson sont prévus. Ils sont de différentes natures. Ils interviennent notamment sur la température de l'eau en ébullition dans ledit générateur de vapeur, sur le débit de vapeur entre ce générateur et le caisson clos et sur le soutirage du condensat, à la partie inférieure de ce caisson.

L'invention concerne aussi des moyens de refroidissement cryogénique, mis en oeuvre après la phase de cuisson.

L'invention sera mieux comprise et d'autres avantages de celle-ci apparaîtront plus clairement à la lumière de la description qui va suivre d'un mode de réalisation d'une installation conforme à son principe, donnée uniquement à titre d'exemple et faite en référence au dessin annexé, dans lequel :
- la figure 1 illustre de façon schématique une installation de cuisson d'aliments, mettant en oeuvre les principes de l'invention;
- la figure 2 est une vue schématique en coupe horizontale longitudinale du caisson de cuisson de la figure 1; et
- la figure 3 est un graphe illustrant un cycle de cuisson recherché pour un type d'aliment particulier, ce cycle étant susceptible d'être exécuté automatiquement par l'installation des figures 1 et 2.

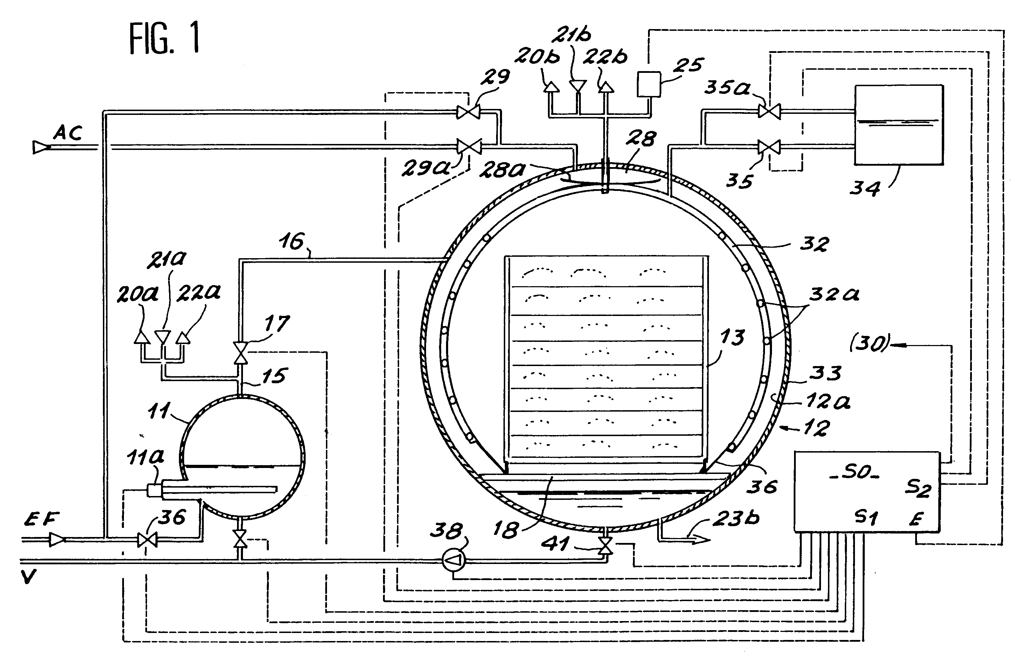

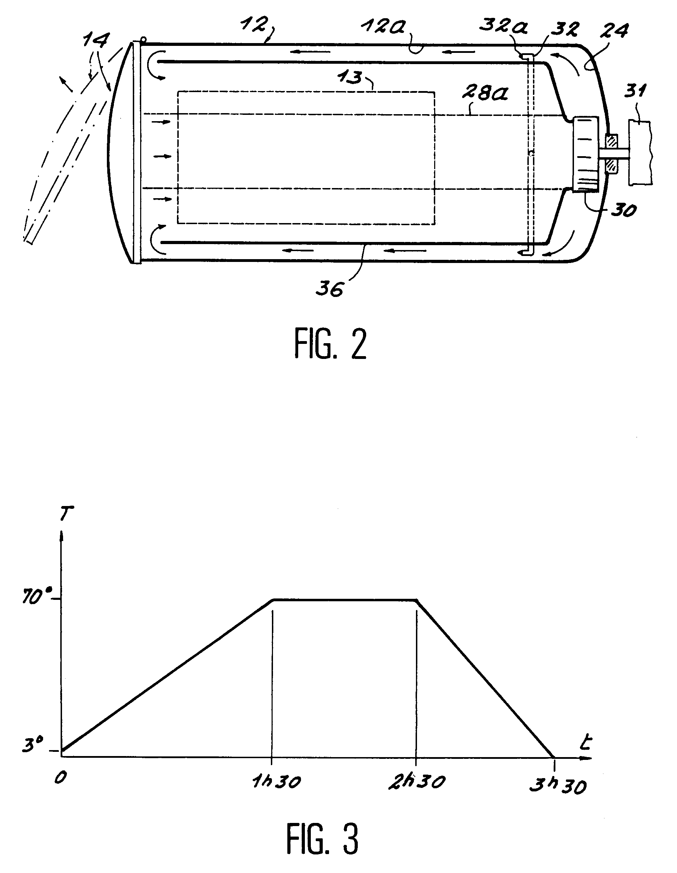

En considérant plus particulièrement les figures 1 et 2, on a représenté schématiquement une installation de cuisson d'aliments, comportant notamment une chaudière formant générateur de vapeur 11 et un caisson clos 12 renfermant un panier 13 dans lequel sont disposés les aliments à cuire. Le panier repose sur un plancher ajouré 18 sous lequel de l'eau de condensat peut s'accumuler. Le caisson est ici globalement cylindrique, avec une porte de chargement 14 définie dans une face d'extrémité axiale. L'eau contenue dans le générateur de vapeur est portée à ébullition par une résistance électrique 11a. Cette dernière est alimentée par intermittence sous la commande de moyens de contrôle qui seront définis plus loin. La sortie de vapeur 15 dudit générateur est reliée au caisson 12 par un conduit 16 dans lequel est insérée une vanne 17, utilisée pour le remplissage initial en vapeur dudit caisson, ainsi que pour contrôler l'admission de vapeur au fur et à mesure du déroulement du cycle de cuisson.

Le générateur de vapeur est muni d'organes de sécurités tels qu'une soupape de surpression 20a, réglée pour s'ouvrir en cas de pression excessive dans la chaudière et un casse-vide 21a sous forme d'une sorte de soupape réglée, au contraire, pour s'ouvrir en cas de dépression excessive dans cette même chaudière, afin d'éliminer tout risque d'implosion. Un purgeur d'air 22a est également connecté à la sortie 15. Son rôle est de laisser échapper l'air contenu dans la chaudière à la mise en service de celle-ci, de sorte que cet air soit remplacé par de la vapeur.

Le purgeur est avantageusement pourvu d'un agencement thermostatique de fermeture automatique, occasionnant sa fermeture dès que la vapeur chauffée commence à s'échapper par ledit purgeur. Le caisson 12 est muni des mêmes éléments de sécurité, agencés de la même façon, à savoir : une soupape de surpression 20b, un casse-vide 21b et deux purgeurs d'air 22b et 23b pour l'évacuation de l'air contenu dans le caisson à la mise en service de l'installation. Tous ces éléments sont connectés à la partie supérieure du caisson 12, sauf le purgeur d'air 23b qui est connecté à sa partie inférieure. Le volume interne du caisson 12 est en outre en communication avec un pressostat 25 qui émet un signal électrique représentatif de la pression absolue (le plus souvent une dépression par rapport à la pression atmosphérique, comme indiqué plus haut) qui règne dans le caisson. Ce signal électrique pilote les fonctions de commande et de régulation, comme on le verra plus loin. Le caisson est équipé intérieurement d'un dispositif de condensation sous la forme d'un répartiteur 28 relié par l'intermédiaire d'une vanne tout ou rien 29, à une source de fluide froid, en l'occurrence ici un réseau de distribution d'eau froide EF. L'eau froide est répartie en lames sur la paroi intérieure du caisson 12 et en aspersion sur la paroi intérieure de la porte 14 et sur la paroi intérieure du fond 24 opposé axialement. Cet agencement a deux effets :
- il assure la condensation de la vapeur et permet d'amener la pression absolue à l'intérieur du caisson 12 à une valeur de consigne choisie,
- il permet de refroidir la masse métallique du caisson 12 afin d'éviter une restitution énergétique qui perturberait l'homogénéité de la température à l'intérieur de ce caisson. Autrement dit, ce ruissellement d'eau sur la paroi interne du caisson évite tout gradient de température à l'intérieur du caisson.

C'est la conformation du répartiteur 28 qui permet d'obtenir un écoulement de l'eau en lames, sur la paroi interne 12a du caisson 12. Ce répartiteur comporte en outre des buses d'extrémité, non représentées, pour asperger d'eau froide la paroi intérieure de la porte 14 et celle du fond 24, opposé. Le répartiteur 28 est disposé à la partie supérieure du caisson et s'étend essentiellement longitudinalement sur sensiblement toute la longueur du caisson. Il comporte des ouvertures latérales définies au voisinage de la paroi interne 12a du caisson. Ces ouvertures s'étendent longitudinalement et de chaque côté du répartiteur. L'espace interne du répartiteur est relié à la source d'eau froide et est donc rempli d'eau. Plus précisément, ce répartiteur est défini entre la partie supérieure de la paroi interne 12a du caisson et une tôle de rétention d'eau 28a, longitudinale, conformée et montée pour que ses bords longitudinaux s'étendent à peu de distance de la paroi interne 12a du caisson pour définir les sorties d'écoulement en lames de l'eau froide. Autrement dit, des fuites longitudinales calibrées sont ménagées de chaque côté de ladite tôle de rétention. Il est à noter que la partie supérieure du caisson qui ne peut être recouverte d'une lame d'eau ruisselante se trouve néanmoins refroidie par l'eau accumulée dans l'espace interne du répartiteur 28.

L'eau est récupérée dans le bas du caisson 12 et est extraite par une pompe 38 du type à anneaux liquides. Les mêmes moyens de condensation sont mis en oeuvre pendant une première phase de refroidissement des produits non ensachés, après cuisson, de manière à créer une pression absolue beaucoup plus basse que la tension superficielle de vapeur d'eau des produits, ce qui permet une évaporation accélérée qui abaisse la température des produits. Pendant ce temps, la masse métallique du caisson reste refroidie par le ruissellement d'eau. Comme on le verra plus loin, cette première phase de refroidissement par évaporation de l'eau au contact des produits est suivie par une phase de refroidissement cryogénique. Dans le cas de produits ensachés, la première phase de refroidissement est assurée par une aspersion d'eau sur les sacs, puis on déclenche la deuxième phase de refroidissement cryogénique.

On va maintenant décrire les moyens de refroidissement cryogénique. Le caisson 12 renferme un ventilateur 30 entraîné extérieurement par un moteur électrique 31. Le ventilateur est monté au centre du fond 24, axialement. Il fait partie des moyens de refroidissement cryogénique comprenant en outre un réservoir 34 de gaz liquéfié, ici du gaz carbonique, relié au caisson 12 par au moins une vanne commandée. Plus précisément, la partie inférieure du réservoir 34 est reliée au caisson par une vanne 35 pour l'injection de gaz carbonique liquide, tandis que la partie supérieure du réservoir 34 est reliée à ce même caisson par une vanne 35a pour l'injection de gaz carbonique gazeux . Ce gaz carbonique gazeux est relativement froid, puisqu'il provient de l'évaporation du gaz carbonique liquide dans le réservoir 34 lui-même. Ces deux vannes sont connectées à une rampe de diffusion 32 courbe, munie de buses de diffusion 32a, régulièrement disposées le long de la rampe. Celle-ci est installée dans un espace laminaire 33 défini entre la paroi interne 12a du caisson 12 et une enveloppe intérieure 36, essentiellement de forme cylindrique, s'étendent à distance constante de la paroi interne 12a dans toute la partie du caisson située au-dessus du plancher 18. L'enveloppe se prolonge axialement en se rétrécissant jusqu'à l'entrée du ventilateur 30, de façon que celui-ci puisse établir une circulation de gaz longitudinalement entre l'intérieur de l'enveloppe 36 (qui est le volume utile du cuiseur) et l'espace laminaire 33. Cette circulation est indiquée par des flèches sur la figure 2. Une vanne commandée, non représentée, permet l'évacuation des gaz réchauffés pendant le refroidissement cryogéniques, au fur et à mesure de l'injection de gaz carbonique dans le caisson.

Le réseau de distribution d'eau froide EF est aussi relié à la chaudière vie une vanne commandée 36, pour réintroduire progressivement de l'eau au fur et à mesure des besoins. La pompe 38 est connectée à une sortie inférieure du caisson 12, vis une vanne commandée 41, pour le soutirage du condensat et des gaz incondensables, notamment ceux provenant du "dégazage" des produits cuits en vrac. Cette pompe à anneaux liquides permet l'évacuation d'un tel mélange condensat-gaz incondensables. La sortie de refoulement de la pompe est connectée à une canalisation de vidange V. La pompe 38 fonctionne automatiquement pour soutirer les condensats ainsi que les incondensables, soit en fonction de cycles établis, soit en fonction de deux limites de température prescrites.

L'installation est complétée par une unité de commande électronique 50 à microprocesseur. Cette unité comprend une entrée E recevant le signal électrique du pressostat 25, des sorties de commande S1 pilotant les moyens de chauffage et de contrôle de température et des sorties de commande S2 pilotant les moyens de refroidissement.

Plus précisément, les sorties S1 pilotent principalement :
- l'alimentation électrique par intermittence de la résistance de chauffage 11a,
- la vanne 17 pilotant l'admission de vapeur dans le caisson 12,
- la vanne 29 permettant d'agir sur la condensation de cette vapeur en commandant le ruissellement de l'eau froide en lames sur la paroi intérieure du caisson ,
- une vanne 29a reliant le répartiteur 28 à une source d'air comprimé AC, bactériostatique, et
- la pompe 38 pour le soutirage du condensat et des incondensables.

Par ailleurs, les sorties S2 pilotent principalement :
- le ventilateur 30 et,
- les vannes 35 et 35a contrôlant la circulation de fluide réfrigéré dans l'échangeur 32.

La conception et la mise au point de l'unité de commande 50 sont de la compétence de l'homme du métier. Le fonctionnement de l'installation est le suivant. A la mise en service, la résistance 11a est alimentée de façon à produire de la vapeur à 100°. Le générateur de pression 11 et le caisson 12 sont donc laissés à la pression atmosphérique et la vanne 17 est ouverte. Lorsque le vapeur a complètement remplacé l'air dans le générateur de vapeur 11, le purgeur 22a se ferme. La vapeur remplit progressivement le caisson 12 en remplaçant l'air qui s'échappe par les purgeurs 22b et 23b. Le purgeur inférieur 23b se ferme avant le purgeur supérieur 22b. Ensuite, la vanne 17 est commandée pour contrôler le débit de vapeur du générateur 11 vers le caisson 12. La résistance 11a n'est plus alimentée que par intermittence sous le contrôle de l'unité de commande 50. La vapeur, en se condensant dans le caisson 12, principalement, au début, au contact des aliments froids, communique sa chaleur latente à ceux-ci, ce qui provoque l'augmentation de température de la masse d'aliments à cuire. Ceci s'effectue sous dépression à une température fonction du point de consigne affiché piloté par le signal fourni par le pressostat 25. La température interne du caisson, après quelques minutes de mise en régime est à sa valeur de consigne avec une homogénéité maximum.

Ainsi, à titre d'exemple, la figure 3 illustre une courbe de montée en température-cuisson-refroidissement, optimale pour la viande de boeuf. Les durées et paramètres caractéristiques de cette courbe sont programmés et adressés à l'unité de commande 50 au début du cycle. On voit que la montée en température s'effectue de +3°C à 70°C en une heure trente, avec une progression sensiblement linéaire, que la cuisson à 70° dure une heure et que le refroidissement s'effectue en une heure de 70°C à 3°C.

Pendant toute la montée en température et le palier de cuisson, la température est maintenue en contrôlant la pression, ici plus particulièrement la dépression qui règne dans le caisson 12. Le contrôle de dépression est principalement obtenu par la régulation de la température de l'eau liquide en cours de vaporisation dans le générateur 11 (c'est-à-dire par l'alimentation intermittente de la résistance 11a sous le contrôle d'une sonde de température non représentée), par l'admission de vapeur supplémentaire dans le caisson 12 (vanne 17) et par la vitesse de condensation de la vapeur dans le caisson 12 (vanne 29) réglée par l'écoulement de l'eau froide le long de la paroi interne du caisson 12. Lorsque de forts réajustements ou variations de dépression sont mis en jeu, c'est principalement par ces trois paramètres (surtout le chauffage de l'eau et la condensation de la vapeur) que l'on agit. De plus, le réglage du niveau de condensat, par la mise en oeuvre intermittente de la pompe 38, a une action plus fine sur la pression de vapeur. En effet, en soutirent du condensat, on augmente très légèrement le volume occupé par la vapeur dans le caisson, ce qui augmente par conséquent la dépression. On agit donc sur ce paramètre surtout pendant le palier de cuisson, pour contrôler la température de cuisson au degré C près.

Il est à noter que la cuisson à moyenne température (au voisinage de 70°C) est non seulement avantageuse du point de vue diététique, mais aussi du point de vue énergétique, car la "puissance" de cuisson à la vapeur est optimale en dessous de 100° et généralement au voisinage de 70°C.

Les produits surgelés peuvent subir un traitement de décongélation avant conditionnement ou cuisson. Ils sont placés surgelés dans le caisson 12. Un vide inférieur à 4,6 mm de mercure est obtenu par mise en oeuvre de la pompe 38. On obtient un changement d'état de la glace en gaz. Cette vapeur est évacuée par la même pompe 38. La température ambiante du caisson 12 est inférieure à +10°C.

Au moment d'aborder la phase de refroidissement, le chauffage du générateur de vapeur 11 est arrêté et la température est alors contrôlée par mise en oeuvre de deux phases successives.

Lorsque les produits ont été cuits en vrac, on met en oeuvre d'abord les moyens de condensetion à lames d'eau en alimentant le répartiteur 28 en eau froide. Ceci se traduit par une condensation de la vapeur et un tirage au vide prononcé. Il en résulte un refroidissement des produits eux-mêmes par évaporation accélérée due à la différence de tension superficielle de vapeur d'eau des produits par rapport à la pression absolue dans le caisson, dès qu'il y a stabilisation de descente en température. Cette première phase de refroidissement par évaporation permet donc de réduire ultérieurement la consommation de gaz carbonique liquide. A la fin de cette première phase de refroidissement, on arrête la mise en oeuvre du ruissellement et on chasse l'eau résiduelle à l'aide d'air comprimé stérile injecté dans le répartiteur par la vanne 29a reliée à la source d'air comprimé AC. On ouvre ensuite la vanne 35a pour injecter du gaz carbonique dans le caisson, jusqu'à ce que la pression à l'intérieur de celui-ci soit légèrement supérieure à la pression atmosphérique. Puis on ouvre la vanne 35 commandant l'admission de gaz carbonique liquéfié en même temps que le ventilateur 30 est mis en route. Le refroidissement se poursuit par injection contrôlée de gaz carbonique liquide, en alternance avec du gaz carbonique gazeux, sous la commande des vannes 35 et 35a.

Pour le refroidissement des produits ensachés, on remplit simplement le caisson par de l'air comprimé stérile, de façon à atteindre une pression légèrement supérieure à la pression atmosphérique, la paroi interne du caisson étant refroidie par film d'eau. Pendant la première phase de refroidissement, les sachets sont simplement aspergés d'eau froide, puis la phase de refroidissement cryogénique se déroule de la même façon que pour les produits en vrac.

## Revendications

1. Installation de cuisson d'aliments à la vapeur, du type comportant un générateur de vapeur d'eau (11), un caisson clos (12) renfermant lesdits aliments, une sortie de vapeur (15) dudit générateur étant reliée audit caisson, et des moyens pour contrôler la pression qui règne dans ledit caisson, comprenant notamment des moyens de condensation de la vapeur contenue dans ledit caisson, caractérisée en ce que ces moyens de condensation comprennent des moyens de formation d'écoulement en lames d'un fluide froid sur la paroi interne dudit caisson comportant un répartiteur (28) s'étendant essentiellement longitudinalement et comprenant des ouvertures latérales définies au voisinage de ladite paroi interne et en ce que l'espace interne dudit répartiteur est relié à une source de fluide froid (EF).

2. Installation selon la revendication 1, caractérisée en ce que ladite source de fluide froid est un réseau de distribution d'eau froide (EF).

3. Installation selon la revendication 1 ou 2, à caisson essentiellement cylindrique, caractérisée en ce que ledit répartiteur (28) est disposé à la partie supérieure dudit caisson (12) et en ce que lesdites ouvertures latérales s'étendent longitudinalement et de chaque côté dudit répartiteur.

4. Installation selon la revendication 3, caractérisée en ce que ledit répartiteur (28) est essentiellement constitué d'une tôle de rétention d'eau (28a) dont les bords longitudinaux s'étendent à peu de distance de la paroi interne (12a) dudit caisson (12), de façon à définir des sorties d'écoulement en lames pour ledit fluide froid.

5. Installation selon l'une des revendications précédentes, caractérisée en ce qu'elle comporte en outre des moyens de refroidissement cryogénique comprenant un réservoir de gaz liquéfié (34), par exemple du gaz carbonique liquéfié, ce réservoir étant relié audit caisson (12) par au moins une vanne commandée (35).

6. Installation de cuisson selon la revendication 5, caractérisée en ce que les moyens de refroidissement cryogénique comprennent une rampe de diffusion (32) courbe, installée dans un espace laminaire (33) défini entre la paroi interne (12a) dudit caisson et une enveloppe intérieure (36) où sont disposés les aliments à cuire et en ce qu'un ventilateur (30) est installé à une extrémité de cette enveloppe intérieure pour établir une circulation de gaz, longitudinalement entre l'intérieur de ladite enveloppe et ledit espace laminaire.

## Claims

1. An apparatus for steam cooking foodstuffs, comprising a steam generator (11), a sealed vessel (12) containing the aforesaid foodstuffs, a steam outlet (15) in the aforesaid steam generator being connected to the aforesaid vessel, and means for controlling the pressure prevailing in the aforesaid vessel, comprising in particular means for condensing the steam contained in the aforesaid vessel, characterized in that these means for condensing comprise means to drain sheets of a cold fluid on the inner wall of the aforesaid vessel comprising a distributor (28) stretching mainly lengthwise and comprising defined lateral openings in the vicinity of the aforesaid inner wall and in that the inner area of the aforesaid distributor is connected to a source of cold fluid (CW).

2. The apparatus as set forth in claim 1, characterized in that the aforesaid source of cold fluid is a cold water distribution network (CW).

3. The apparatus as set forth in claim 1 or 2, wherein the vessel is essentially of cylindrical shape, characterized in that the aforesaid distributor (28) is located on the upper part of the aforesaid vessel (12) and in that the aforesaid lateral openings stretch lengthwise and on either side of the aforesaid distributor.

4. The apparatus as set forth in claim 3, characterized in that the aforesaid distributor (28) mainly consists in a plate intended to retain water (28a), the longitudinal edges of which extend up to a short distance from the inner wall (12a) of the aforesaid vessel (12), so as to define outlets to drain the aforesaid cold fluid in sheets.

5. The apparatus as set forth in one of the above claims, characterized in that it additionally comprises cryogenic cooling means consisting in a tank containing liquefied gas (34), liquefied carbon dioxide for example, this tank being connected to the aforesaid vessel (12) via at least one controlled valve (35).

6. The cooking apparatus as set forth in claim 5, characterized in that the cryogenic cooling means comprise a curved distribution rail (32), mounted in a laminar gap (33) defined between the inner wall (12a) of the aforesaid vessel and an inner case (36) wherein the foodstuffs to be cooked are located, and in that a fan (30) is mounted at the end section of the aforesaid inner case to enable gas to flow, lengthwise between the inner space of the aforesaid case and the aforesaid laminar gap.

## Patentansprüche

1. Nahrungsmitteldampfkocheinrichtung, bestehend aus einem Wasserdampferzeuger (11), einem geschlossenen Behälter (12), welcher die Nahrungsmittel beinhaltet, einem am Behälter angeschlossenen Dampfausgang (15) des Dampferzeugers, und Mitteln für die Kontrolle des im Behälter herrschenden Drucks, dadurch gekennzeichnet, daß diese Kondensationsmittel Mittel für die Laminarströmungsbildung einer Kühlflüssigkeit auf der Innenwandung des Behälters beinhalten; diese Mittel weisen einen Verteiler (28) auf, welcher im wesentlichen in Längsrichtung verläuft und seitliche Öffnungen in der Nähe der Innenwandung aufweist; die Nahrungsmitteldampfkocheinrichtung ist außerdem dadurch gekennzeichnet, daß der Innenraum der Verteilers mit einer Kühlflüssigkeitsquelle (EF) verbunden ist.

2. Einrichtung, gemäß Patentanspruch 1, dadurch gekennzeichnet, daß die Kühlflüssigkeitsquelle ein Kaltwasserverteilungsnetz ist (EF).

3. Einrichtung, gemäß Patentanspruch 1 oder 2, mit im wesentlichen zylindrischem Behälter, dadurch gekennzeichnet, daß der Verteiler (28) am Oberteil des Behälters (12) angeordnet ist und daß die seitlichen Öffnungen sich in Längsrichtung und auf jeder Seite des Verteilers erstrecken.

4. Einrichtung, gemäß Patentanspruch 3, dadurch gekennzeichnet, daß der Verteiler (28) im wesentlichen aus einem Wasserzurückhalteblech (28a) besteht, dessen Längskanten sich in geringem Abstand von der Innenwandung (12a) des Behälters (12) erstrecken, um die Laminarströmungsausgänge für besagte Kühlflüssigkeit zu bestimmen.

5. Einrichtung, gemäß einem der obengenannten Patentansprüche, dadurch gekennzeichnet, daß sie zusätzlich Tiefsttemperaturkühlmittel aufweist, welche einen Behälter mit Flüssiggas (34), zum Beispiel Flüssigkohlendioxid, beinhalten, wobei dieser Behälter über mindestens ein Steuerventil (35) mit obengenanntem Behälter (12) verbunden ist.

6. Kocheinrichtung, gemäß Patentanspruch 5, dadurch gekennzeichnet, daß die Tiefsttemperaturkühlmittel eine bogenförmige Verteilungsrampe aufweisen, welche sich in einem Laminarraum (33) befindet, der durch die Innenwandung (12a) des obengenannten Behälters und durch eine innere Ummantelung (36) abgegrenzt ist, und in dem die zu kochenden Nahrungsmittel angeordnet sind; die Kocheinrichtung ist außerdem dadurch gekennzeichnet, daß sich ein Ventilator (30) an einem Ende dieser inneren Umhüllung befindet, um einen Gasumlauf in der Längsrichtung der Umhüllung und des Laminarraums zu bewirken.
